# EUROPEAN PATENT SPECIFICATION

(11) **EP 4 503 219 B1**
(45) Date of publication and mention of the grant of the patent: **30.09.2026**
(21) Application number: 24181420.1
(22) Date of filing: 11.06.2024
(51) Int. Cl.: H01M 10/052, H01M 10/0525, H01M 10/0567, H01M 10/0568, H01M 10/0569

(54) **LIQUID ELECTROLYTE, AND RECHARGEABLE LITHIUM BATTERY INCLUDING THE SAME**
FLÜSSIGER ELEKTROLYT UND WIEDERAUFLADBARE LITHIUMBATTERIE DAMIT
ÉLECTROLYTE LIQUIDE ET BATTERIE AU LITHIUM RECHARGEABLE LE COMPRENANT

(30) Priority: 01.08.2023 KR 20230100657
(43) Date of publication of application: 05.02.2025
(73) Proprietor: Samsung SDI Co., Ltd., Yongin-si, Gyeonggi-do 17084 (KR); Ulsan National Institute of Science and Technology (UNIST), Eonyang-eup Ulju-gun Ulsan 44919 (KR)
(72) Inventor: Woo, Myungheui, Yongin-si, Gyeonggi-do 17084 (KR); Park, Hyejin, Yongin-si, Gyeonggi-do 17084 (KR); Kim, Sanghoon, Yongin-si, Gyeonggi-do 17084 (KR); Yu, Arum, Yongin-si, Gyeonggi-do 17084 (KR); Choi, Nam-Soon, Ulju-gun, Ulsan 44919 (KR)
(74) Representative: Gulde & Partner

(56) References cited:
- WO-A1-2020/156972
- WO-A1-2021/133127
- WO-A1-2023/096322
- KR-A- 20190 079 171
- KR-B1- 101 623 461
- US-A1- 2020 274 195
- US-A1- 2022 140 383

## Description

### BACKGROUND

### (a) Field of the Invention

This disclosure relates to a liquid electrolyte, and a rechargeable lithium battery including the same.

### (b) Description of the Related Art

A rechargeable lithium battery may be recharged and has three or more times higher energy density per unit weight than a conventional lead storage battery, nickel-cadmium battery, nickel hydrogen battery, nickel zinc battery and the like. The rechargeable lithium battery may be highly charged (e.g., may carry a relatively high charge) and thus, is commercially manufactured for laptops, cell phones, electric tools, electric bikes, and the like. and research on further improvement of energy density have been actively made.

A rechargeable lithium battery is used by injecting an electrolyte into a battery cell including a positive electrode including a positive electrode active material that can intercalate and deintercalate lithium and a negative electrode including a negative electrode active material that can intercalate and deintercalate lithium.

A currently commercially available electrolyte uses an organic carbonate-based solvent to withstand a high operation voltage of rechargeable lithium batteries.

However, the organic carbonate-based solvent is highly volatile and flammable and has a low flash point and thus is gasified at a high temperature, which may make the battery swell up and a polyethylene (PE) separator melt down and shrink, which causes safety issues of the rechargeable lithium batteries.

However, despite attempts to solve these safety issues of the rechargeable lithium batteries via extensive research on separator, current collector, active materials and battery management systems (BMS), as long as highly flammable organic carbonate-based solvents are used, the issues cannot be easily solved, yet.

Recently, as ignition accidents involving electric vehicles have frequently occurred, the safety issues of the rechargeable lithium batteries are being actively discussed. In particular, there is a need to fundamentally solve the issue of flammable solvents and to find a solution from the electrolyte perspective. Examples may be found in WO 2020/156972 A1, KR 101 623 461 B1, US 2020/274195 A1, US 2022/140383 A1 or KR 2019 0079171 A.

### SUMMARY OF THE INVENTION

One or more aspects of embodiments of the present disclosure are directed toward a liquid electrolyte that can achieve excellent or suitable battery safety.

One or more aspects of embodiments are directed toward a rechargeable lithium battery comprising the liquid electrolyte.

According to one or more embodiments a liquid electrolyte comprises a lithium salt; a non-aqueous organic solvent; and an additive, wherein the additive comprises a polymer represented by Chemical Formula 1.

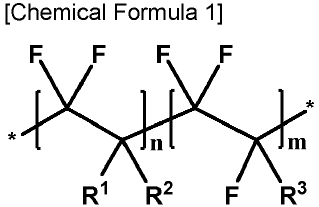

In Chemical Formula 1,
R¹ to R³ are each independently hydrogen, fluorine, or a substituted or unsubstituted C1 to C10 alkyl group, and
n and m are mole fractions and are, respectively, 50 mol%≤n≤90 mol%, 10 mol%≤m≤50 mol%.

In a preferred embodiment of the present invention, the n and m (n:m) may be about 80 mol%: about 20 mol% to about 60 mol%: about 40 mol%. For example, the ratio of the mole fractions n : m is about 80 mol% : about 20 mol% to about 60 mol% : about 40 mol%.

In another preferred embodiment of the present invention, a molecular weight of the polymer may be about 100,000 g/mol to about 400,000 g/mol. The molecular weight of the polymer may be measured by static light scattering.

In further preferred embodiment of the present invention, the polymer may be in a form of particles having an average particle diameter of about 10 nm to about 1 µm.

In further preferred embodiment of the present invention, R¹ to R³ in Chemical Formula 1 may each independently be hydrogen, or a substituted or unsubstituted C1 to C5 alkyl group.

In another preferred embodiment of the present invention, the polymer may be poly(vinylidene fluoride-co-trifluoroethylene). In other words, the polymer may be a copolymer of vinylidene fluoride units and trifluoroethylene units.

In another preferred embodiment of the present invention, the polymer may be poly(vinylidene fluoride-co-trifluoroethylene) according to Chemical Formula 1 with R¹ to R³ are hydrogen, and the ratio of the mole fractions n : m is about 80 mol% : about 20 mol% to about 60 mol% : about 40 mol%, more preferred, about 75 mol% : about 25 mol%.

In another preferred embodiment of the present invention, the polymer may be gellable (e.g., may be gelled) at a temperature of about 100 °C to about 120 °C.

In further preferred embodiment of the present invention, the polymer may be included in an amount of about 0.1 to about 15 parts by weight based on a total of 100 parts by weight of the liquid electrolyte.

In further preferred embodiment of the present invention, the non-aqueous organic solvent may comprise at least one of a carbonate-based solvent, an ester-based solvent, an ether-based solvent, a ketone-based solvent, an alcohol-based solvent, an aprotic solvent, or mixtures thereof.

In another preferred embodiment of the present invention, the non-aqueous organic solvent may comprise a carbonate-based solvent selected from at least one of the group of dimethyl carbonate, diethyl carbonate, dipropyl carbonate, methylpropyl carbonate, ethylpropyl carbonate, ethylmethyl carbonate, ethylene carbonate, propylene carbonate, butylene carbonate, or mixtures thereof.

In yet another preferred embodiment of the present invention, the carbonate-based solvent may be a mixture of ethylene carbonate, ethylmethyl carbonate and dimethyl carbonate.

In further preferred embodiment of the present invention, the non-aqueous organic solvent may include cyclic carbonate and chain carbonate in a volume ratio of about 10:90 vol% to about 50:50 vol%.

The liquid electrolyte further comprises at least one of an additive selected from the group consisting of vinylene carbonate (VC), fluoroethylene carbonate (FEC), difluoroethylene carbonate, chloroethylene carbonate, dichloroethylene carbonate, bromoethylene carbonate, dibromoethylene carbonate, nitroethylene carbonate, cyanoethylene carbonate, vinylethylene carbonate (VEC), adiponitrile (AN), succinonitrile (SN), 1,3,6-hexane tricyanide (HTCN), propenesultone (PST), propanesultone (PS), lithium tetrafluoroborate (LiBF₄), lithium difluorophosphate (LiPO₂F₂), and 2-fluoro biphenyl (2-FBP).

Another aspect of the present invention is directed towards a rechargeable lithium battery comprising a positive electrode including a positive electrode active material; a negative electrode including a negative electrode active material; and the liquid electrolyte of at least one of the aforementioned embodiments.

The rechargeable lithium battery provides improved safety that can prevent battery short circuit, heat generation, and explosion by blocking ion conduction of the battery when an issue occurs, suppressing swelling caused by evaporation of liquid electrolyte, and suppressing shrinkage of the separator.

### BRIEF DESCRIPTION OF THE DRAWINGS

FIGS. 1 to 4 are cross-sectional views schematically showing rechargeable lithium batteries according to embodiments.
FIG. 5 is a graph showing specific capacity and coulombic efficiency according to cycle numbers during high temperature charging and discharging of rechargeable lithium battery cells.
FIG. 6 is a result graph showing the results of the hot-box test of the pouch full cell.
FIG. 7 is a graph showing the results of TGA analysis of a liquid electrolyte according to one or more embodiments.
FIG. 8 shows the results of measuring the cell resistance of rechargeable lithium battery cells maintained for 1 hour after reaching room temperature (25 °C) or high temperature (120 °C), respectively.

### DETAILED DESCRIPTION OF THE EMBODIMENTS

Hereinafter, embodiments will be described in more detail so that those of ordinary skill in the art can easily implement them. However, this disclosure may be embodied in many different forms and is not construed as limited to the example embodiments set forth herein.

The terminology used herein is used to describe example embodiments only, and is not intended to limit the present disclosure. The singular expression includes the plural expression unless the context clearly dictates otherwise.

As used herein, "combination thereof" refers to a mixture, laminate, composite, copolymer, alloy, blend, reaction product, and the like of the constituents.

Herein, it should be understood that terms such as "comprises," "includes," or "have" are intended to designate the presence of an embodied feature, number, step, element, or a combination thereof, but it does not preclude the possibility of the presence or addition of one or more other features, number, step, element, or a combination thereof.

As used herein, when a definition is not otherwise provided, a particle diameter may be an average particle diameter. This particle diameter refers to an average particle diameter (D50), which is a diameter of particles with a cumulative volume of 50 volume% in the particle size distribution. The average particle size (D50) can be measured by methods well known to those skilled in the art, for example, by measuring with a particle size analyzer, a transmission electron microscope or scanning electron microscope, or a scanning electron microscope. Alternatively, a dynamic light-scattering measurement device is used to perform a data analysis, and the number of particles is counted for each particle size range. From this, the average particle diameter (D50) may be easily obtained through a calculation. Preferably, a laser diffraction method may be used. When determining the average particle size (D50) by laser diffraction method, more specifically, the particles to be measured are dispersed in a dispersion medium and then introduced into a commercially available laser diffraction particle size measuring device (e.g., MT 3000 available from Microtrac, Ltd.) using ultrasonic waves at about 28 kHz, and after irradiation with an output of 60 W, the average particle size (D50) based on 50% of the particle size distribution in the measuring device can be calculated.

As used herein, when a definition is not otherwise provided, a molecular weight of the polymer refers to the weight-average molecular weight of the polymer. The weight-average molecular weight, *M_{w}.* For all *"i"* molecules in a sample, the weight-average molecular weight is calculated using equation (Eq.1). ${M}_{w} = {\sum }_{i} {N}_{i} {{M}_{i}}^{2} / {\sum }_{i} {N}_{i} {M}_{i}$ where:
*i* is the number of polymer molecules,
*Nᵢ* is the number of molecules that have the molecular weight *Mᵢ*.
The weight-average molecular weight may be determined by static light scattering.

In the drawings, the thickness of layers, films, panels, regions, etc., are exaggerated for clarity and like reference numerals designate like elements throughout the specification. It will be understood that when an element such as a layer, film, region, or substrate is referred to as being "on" another element, it can be directly on the other element or intervening elements may also be present. In contrast, when an element is referred to as being "directly on" another element, there are no intervening elements present.

In addition, the term "layer" herein includes not only a shape formed on the whole surface when viewed in a plan view, but also a shape formed on a partial surface.

Herein, "or" is not to be construed as an exclusive meaning, for example, "A or B" is construed to include A, B, A+B, and the like.

"Metal" is interpreted as a concept that includes ordinary metals, transition metals, and semi-metals.

As used herein, when a definition is not otherwise provided, "substituted" refers to replacement of at least one hydrogen of a substituent or a compound by deuterium, a halogen group, a hydroxyl group, an amino group, a substituted or unsubstituted C1 to C30 amine group, a nitro group, a substituted or unsubstituted C1 to C40 silyl group, a C1 to C30 alkyl group, a C1 to C10 alkylsilyl group, a C6 to C30 arylsilyl group, a C3 to C30 cycloalkyl group, a C3 to C30 heterocycloalkyl group, a C6 to C30 aryl group, a C2 to C30 heteroaryl group, a C1 to C20 alkoxy group, a C1 to C10 fluoroalkyl group, a cyano group, or a combination thereof.

In some embodiments of the present disclosure, the term "substituted" refers to replacement of at least one hydrogen of a substituent or a compound by deuterium, a halogen group, a C1 to C30 alkyl group, a C1 to C10 alkylsilyl group, a C6 to C30 arylsilyl group, a C3 to C30 cycloalkyl group, a C3 to C30 heterocycloalkyl group, a C6 to C30 aryl group, a C2 to C30 heteroaryl group, a C1 to C10 fluoroalkyl group, or a cyano group. In some embodiments of the present disclosure, the term "substituted" refers to replacement of at least one hydrogen of a substituent or a compound by deuterium, a halogen group, a C1 to C20 alkyl group, a C6 to C30 aryl group, a C1 to C10 fluoroalkyl group, or a cyano group. In preferred embodiments of the present disclosure, the "substituted" refers to replacement of at least one hydrogen of a substituent or a compound by deuterium, a halogen group, a C1 to C5 alkyl group, a C6 to C18 aryl group, a C1 to C5 fluoroalkyl group, or a cyano group. In another preferred embodiment of the present disclosure, the term "substituted" refers to replacement of at least one hydrogen of a substituent or a compound by deuterium, a cyano group, a halogen group, a methyl group, an ethyl group, a propyl group, a butyl group, a phenyl group, a biphenyl group, a terphenyl group, a trifluoromethyl group, or a naphthyl group.

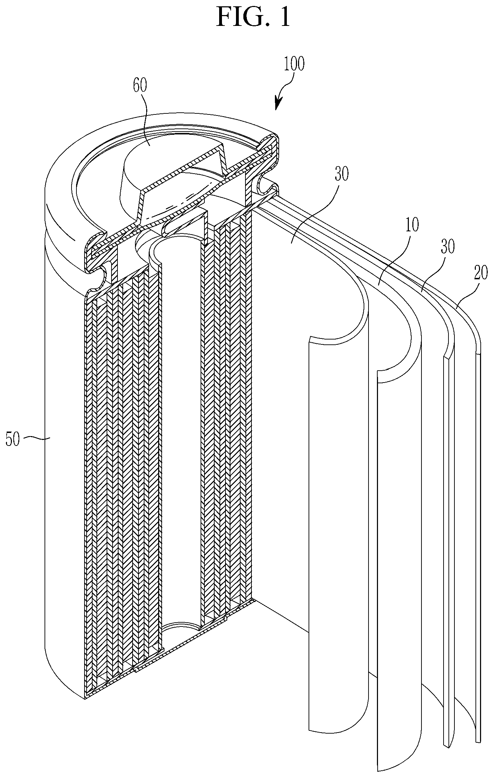

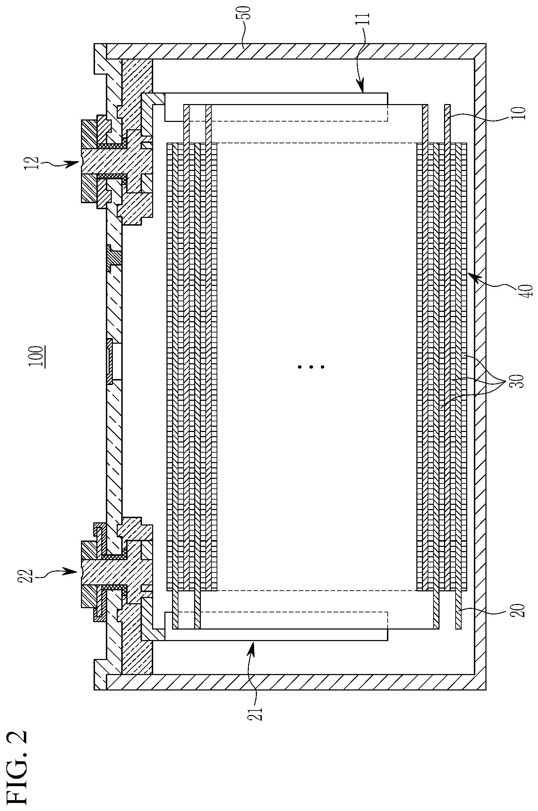

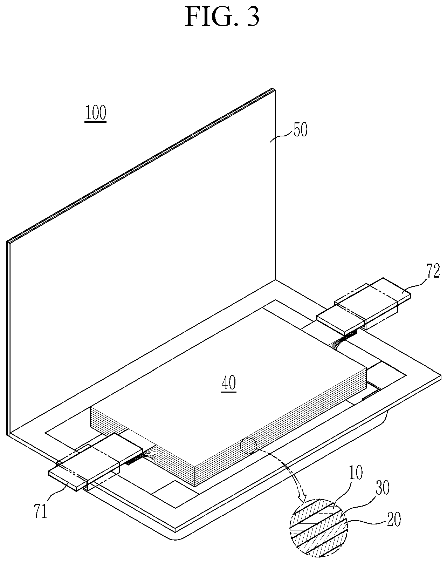

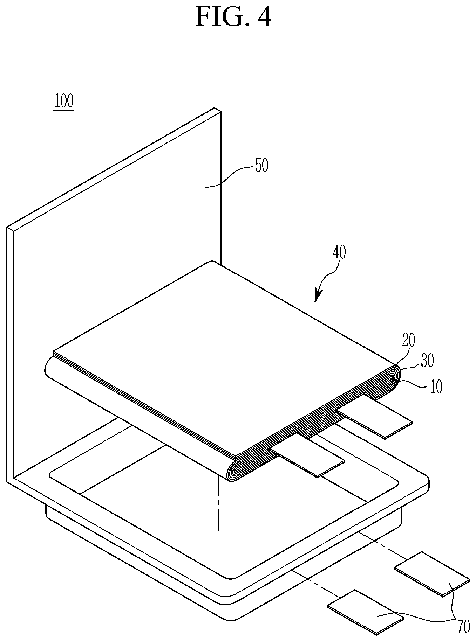

The rechargeable lithium battery may be classified into cylindrical, prismatic, pouch, coin-type (or coin kind) batteries, and the like depending on their shape. FIGS. 1 to 4 are schematic views illustrating rechargeable lithium batteries according to one or more embodiments. FIG. 1 shows a cylindrical battery, FIG. 2 shows a prismatic battery, and FIGS. 3 and 4 show pouch-type (or pouch kind) batteries. Referring to FIGS. 1 to 4, the rechargeable lithium battery 100 may include an electrode assembly 40 including a separator 30 between a positive electrode 10 and a negative electrode 20, and a case 50 in which the electrode assembly 40 is included. The positive electrode 10, the negative electrode 20, and the separator 30 may be impregnated with a liquid electrolyte (not shown). The rechargeable lithium battery 100 may include a sealing member 60 sealing the case 50, as shown in FIG. 2. In FIG. 3, the rechargeable lithium battery 100 may include a positive electrode lead tab 11, a positive terminal 12, a negative electrode lead tab 21, and a negative terminal 22. As shown in FIGS. 3 and 4, the rechargeable lithium battery 100 may include an electrode tab 70, which may be, for example, a positive electrode tab 71 and a negative electrode tab 72 serving as an electrical path for inducing the current formed in the electrode assembly 40 to the outside.

Hereinafter, an electrolyte according to one or more embodiments will be described.

The electrolyte according to one or more embodiments is a liquid electrolyte comprising a lithium salt, a non-aqueous organic solvent, and an additive (or primary additive), wherein the additive (or primary additive) comprises or consists of a polymer represented by Chemical Formula 1.

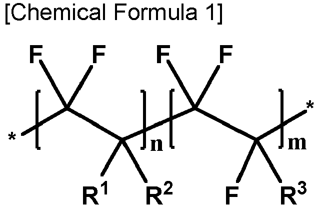

In Chemical Formula 1,
R¹ to R³ are each independently hydrogen, fluorine, or a substituted or unsubstituted C1 to C10 alkyl group, and
n and m are mole fractions and are, respectively, 50 mol%≤n≤90 mol%, 10 mol%≤m≤50 mol%.

The polymer represented by Chemical Formula 1, when exposed to a high temperature of 100 °C or higher, is gelled by crystallization in the liquid electrolyte. This provides the beneficial effect that it may not only suppress or reduce gasification of the liquid electrolyte and thus expansion of the battery, but also suppress or reduce fire and explosion of the battery by blocking or reducing ionic and electronic conductions of the battery and preventing sharp energy release due to a direct contact (a short-circuit) of the positive and negative electrodes (e.g. a short-circuit that is generated through a mechanism of physically fixing the PE separator which melts and shrinks at about 140 °C) and results in improving safety of the battery.

In one or more embodiments, the polymer represented by Chemical Formula 1 is dispersed in the liquid electrolyte before any of the issues occur, such as a high temperature, an impact, and/or the like. Here the liquid electrolyte in which the polymer represented by Chemical Formula 1 is included is different from a solid electrolyte that is formed at the electrolyte phase by polymerization of the polymer with a polymerization initiator.

Since the solid electrolyte is present in a solid state in a battery, the battery may exhibit a low output and a short cycle-life due to low ion conductivity. By comparing with comparative examples, a battery applied with the liquid electrolyte according to the present invention may exhibit significantly different effects.

For example, a ratio of n and m (n:m) may be about 80 mol%:about 20 mol% to about 60 mol%:about 40 mol%, or about 80 mol%:about 20 mol% to about 70 mol%:about 30 mol%.

The higher the content (e.g. amount) of the vinylidene fluoride structural unit in the polymer relative to the content of the trifluoroethylene structural unit, the more effective the improvement in battery stability are.

A molecular weight of the polymer may be about 100,000 g/mol to about 400,000 g/mol.

For example, the molecular weight of the polymer may be about 200,000 g/mol to about 400,000 g/mol.

The polymer may be in the form of particles having an average particle diameter of about 10 nm to about 1 µm. The average particle diameter may refer to an average particle size (D50) measured by laser diffraction method as describe above.

For example, an average particle diameter of the polymer may be about 10 nm to about 900 nm, about 10 nm to about 800 nm, about 10 nm to about 700 nm, or about 10 nm to about 600 nm. The average particle diameter may refer to an average particle size (D50) measured by laser diffraction method as describe above.

For example, the average particle diameter of the polymer is about 30 nm to about 1 µm, about 50 nm to about 1 µm, about 100 nm to about 1 µm, about 100 nm to about 900 nm, about 100 nm to about 800 nm, about 100 nm to about 700 nm, or about 100 nm to about 600 nm. The average particle diameter may refer to an average particle size (D50) measured by laser diffraction method as describe above.

The polymer may be in the form of particles, and when the average particle size is within the above range, precipitation of the polymer in the liquid electrolyte can be alleviated, thereby reducing capacity degradation due to cycle repetition.

As an example, R¹ to R³ in Chemical Formula 1 may each independently be hydrogen or a substituted or unsubstituted C1 to C5 alkyl group.

For example, the polymer may be poly(vinylidene fluoride-co-trifluoroethylene).

The polymer can be gelled at a temperature of about 100 °C to about 120 °C.

For example, the polymer may be included in an amount of about 0.1 to about 15 parts by weight based on a total of 100 parts by weight of the liquid electrolyte.

Preferably, the polymer may be included in an amount of about 0.5 to about 15 parts by weight, more preferred in about 1 to about 15 parts by weight, even more preferred in about 5 to about 15 parts by weight, based on a total of 100 parts by weight of the liquid electrolyte.

When the polymer content is in a range as described above, a rechargeable lithium battery with improved stability can be implemented by preventing an increase in resistance at high temperatures while ensuring cycle-life characteristics and output characteristics.

The non-aqueous organic solvent serves as a medium for transmitting ions taking part in the electrochemical reaction of a battery.

The non-aqueous organic solvent may comprise at least one of a carbonate-based solvent, ester-based solvent, ether-based solvent, ketone-based solvent, alcohol-based solvent, an aprotic solvent, or mixtures thereof.

The term carbonate-based solvent may comprise dimethyl carbonate (DMC), diethyl carbonate (DEC), dipropyl carbonate (DPC), methylpropyl carbonate (MPC), ethylpropyl carbonate (EPC), ethylmethyl carbonate (EMC), ethylene carbonate (EC), propylene carbonate (PC), butylene carbonate (BC), and the like. The term ester-based solvent may comprise methyl acetate, ethyl acetate, n-propyl acetate, dimethylacetate, methylpropionate, ethylpropionate, decanolide, mevalonolactone, caprolactone, and the like. The term ether-based solvent may comprise dibutyl ether, tetraglyme, diglyme, dimethoxyethane, 2-methyltetrahydrofuran, tetrahydrofuran, and the like. In addition, the term ketone-based solvent may comprise cyclohexanone, and the like. The term alcohol-based solvent may comprise ethanol, isopropyl alcohol, and the like, and the term aprotic solvent may comprise nitriles such as R¹-CN (wherein R¹ is a C2 to C20 linear, branched, or cyclic hydrocarbon group, and may include a double bond, an aromatic ring, or an ether bond), and the like, amides such as dimethylformamide, dioxolanes such as 1,3-dioxolane, 1,4-dioxolane, sulfolanes, and the like.

The non-aqueous organic solvent may be used singularly or in a mixture. When the non-aqueous organic solvent is used in a mixture, the mixture ratio may be controlled in accordance with a desirable battery performance.

The non-aqueous organic solvent according to one or more embodiments may include cyclic carbonate and chain carbonate in a volume ratio of about 10:90 vol% to about 50:50 vol%.

For example, the non-aqueous organic solvent may include cyclic carbonate and chain carbonate in a volume ratio of about 10:90 vol% to about 40:60 vol%, for example, about 10:90 vol% to about 30:70 vol%, or about 10:90 vol% to about 25:75 vol%.

When the non-aqueous organic solvent of the above-mentioned composition is used, the viscosity of the liquid electrolyte increases as the polymer in the liquid electrolyte is gelled above a certain temperature, and as the resistance increases, the gelled polymer acts as an insulator and blocks ionic and electronic conduction of the battery, ensuring the stability of the battery.

The liquid electrolyte further includes at least one of other additives (secondary additives) selected from the group of vinylene carbonate (VC), fluoroethylene carbonate (FEC), difluoroethylene carbonate, chloroethylene carbonate, dichloroethylene carbonate, bromoethylene carbonate, dibromoethylene carbonate, nitroethylene carbonate, cyanoethylene carbonate, vinylethylene carbonate (VEC), adiponitrile (AN), succinonitrile (SN), 1,3,6-hexane tricyanide (HTCN), propenesultone (PST), propanesultone (PS), lithium tetrafluoroborate (LiBF₄), lithium difluorophosphate (LiPO₂F₂), and 2-fluoro biphenyl (2-FBP).

By further including any of the other additives (secondary additives) mentioned above, cycle-life of the battery can be further improved. Also, gases generated from the positive electrode and the negative electrode can be effectively controlled when stored at high temperatures.

The other additives (secondary additives) may be included in an amount of about 0.2 to about 20 parts by weight, preferably about 0.2 to about 15 parts by weight, for example, about 0.2 to about 10 parts by weight, based on a total of 100 parts by weight of the liquid electrolyte for a rechargeable lithium battery.

If the content of other additives (secondary additives) is as above, the other additives can contribute to improving battery performance by minimizing the increase in film resistance.

The lithium salt dissolved in the non-aqueous organic solvent supplies lithium ions in a battery, enables a basic operation of a rechargeable lithium battery, and improves transportation of the lithium ions between positive and negative electrodes. Examples of the lithium salt include at least one selected from the group of LiPF₆, LiBF₄, LiSbF₆, LiAsF₆, LiClO₄, LiAlO₂, LiAlCl₄, LiPO₂F₂, LiCl, LiI, LiN(SO₃C₂F₅)₂, Li(FSO₂)₂N (lithium bis(fluorosulfonyl)imide, LiFSI), LiC₄F₉SO₃, LiN(CₓF₂ₓ₊₁SO₂)(C_{y}F_{2y+1}SO₂) (wherein x and y are integers of 1 to 20), lithium trifluoromethane sulfonate, lithium tetrafluoroethanesulfonate, lithium difluorobis(oxalato)phosphate (LiDFOB), and lithium bis(oxalato) borate (LiBOB).

Another embodiment of the present invention provides a rechargeable lithium battery including a positive electrode including a positive electrode active material; a negative electrode including a negative electrode active material; and the aforementioned liquid electrolyte.

The positive electrode includes a positive electrode current collector and a positive electrode active material layer on the positive electrode current collector, and the positive electrode active material layer includes a positive electrode active material and may optionally further include a binder and/or a conductive material.

The positive electrode active material may include a compound (lithiated intercalation compound) that is capable of intercalating and deintercalating lithium. For example, at least one of a composite oxide of lithium and a metal selected from cobalt, manganese, nickel, and combinations thereof may be used.

The composite oxide may be a lithium transition metal composite oxide. In an embodiment of the disclosure, the composite oxide may include lithium nickel-based oxide, lithium cobalt-based oxide, lithium manganese-based oxide, lithium iron phosphate-based compound, cobalt-free nickel-manganese-based oxide, or a combination thereof.

In a preferred embodiment of the disclosure, the composite oxide may be represented by any one of the following Chemical Formulae: LiₐA_{1-b}X_{b}O_{2-c}O_{c} (0.90≤a≤1.8, 0≤b≤0.5, and 0≤c≤0.05); LiₐMn_{2-b}X_{b}O_{4-c}O_{c} (0.90≤a≤1.8, 0≤b≤0.5, and 0≤c≤0.05); LiₐNi_{1-b-c}Co_{b}X_{c}O_{2-α}D_{α} (0.90≤a≤1.8, 0≤b≤0.5, 0≤c≤0.5, and 0<α<2); LiₐNi_{1-b-c}Mn_{b}X_{c}O_{2-α}O_{α} (0.90≤a≤1.8, 0≤b≤0.5, 0≤c≤0.5, and 0<α<2); LiₐNi_{b}Co_{c}L¹_{d}GₑO₂ (0.90≤a≤1.8, 0≤b≤0.9, 0≤c≤0.5, 0≤d≤0.5, and 0≤e≤0.1); LiₐNiG_{b}O₂ (0.90≤a≤1.8 and 0.001≤b≤0.1); LiₐCoG_{b}O₂ (0.90≤a≤1.8 and 0.001≤b≤0.1); LiₐMn_{1-b}G_{b}O₂ (0.90≤a≤1.8 and 0.001≤b≤0.1); LiₐMn₂G_{b}O₄ (0.90≤a≤1.8 and 0.001≤b≤0.1); LiₐMn_{1-g}G_{g}PO₄ (0.90≤a≤1.8 and 0≤g≤0.5); Li_{(3-f)}Fe₂(PO₄)₃ (0≤f≤2); and LiₐFePO₄ (0.90≤a≤1.8).

In the above chemical formulae, A is Ni, Co, Mn, or a combination thereof; X is Al, Ni, Co, Mn, Cr, Fe, Mg, Sr, V, a rare earth element or a combination thereof; D is O, F, S, P, or a combination thereof; G is Al, Cr, Mn, Fe, Mg, La, Ce, Sr, V, or a combination thereof; and L¹ is Mn, Al, or a combination thereof.

The positive electrode active material may be, for example, a high nickel-based positive electrode active material having a nickel content of greater than or equal to about 80 mol%, greater than or equal to about 85 mol%, greater than or equal to about 90 mol%, greater than or equal to about 91 mol%, or greater than or equal to about 94 mol% and less than or equal to about 99 mol% based on 100 mol% of the metal excluding lithium in the lithium transition metal composite oxide. The high-nickel-based positive electrode active material may be capable of realizing high capacity and can be applied to a high-capacity, high-density rechargeable lithium battery.

An amount of the positive electrode active material may be about 90 wt% to about 99.9 wt% based on 100 wt% of the positive electrode active material layer. Amounts of the binder and the conductive material may be about 0.1 wt% to about 5 wt%, respectively, based on 100 wt% of the positive electrode active material layer.

The binder serves to attach the positive electrode active material particles well or suitably to each other and also to attach the positive electrode active material well or suitably to the positive electrode current collector. Examples of the binder may include polyvinyl alcohol, carboxymethyl cellulose, hydroxypropyl cellulose, diacetyl cellulose, polyvinylchloride, carboxylated polyvinylchloride, polyvinylfluoride, a polymer including ethylene oxide, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, nylon, and the like, as non-limiting examples.

The conductive material may be used to impart conductivity (e.g., electrical conductivity) to the electrode. Any material that does not cause chemical change (e.g., does not cause an undesirable chemical change in the rechargeable lithium battery) and conducts electrons can be used in the battery. Examples of the conductive material may include a carbon-based material such as natural graphite, artificial graphite, carbon black, acetylene black, ketjen black, a carbon fiber, a carbon nanofiber, and carbon nanotube; a metal-based material containing copper, nickel, aluminum, silver, etc. , in a form of a metal powder or a metal fiber; a conductive polymer such as a polyphenylene derivative; or a mixture thereof.

Al foil may be used as the positive electrode current collector, but is not limited thereto.

The negative electrode includes a negative electrode current collector and a negative electrode active material layer on the negative electrode current collector, and the negative electrode active material layer includes a negative electrode active material and may optionally further include a binder and/or a conductive material.

The negative electrode active material may include a material that reversibly intercalates/deintercalates lithium ions, a lithium metal, a lithium metal alloy, a material capable of doping/dedoping lithium, or a transition metal oxide.

The material that reversibly intercalates/deintercalates lithium ions may include a carbon-based negative electrode active material, such as, for example. crystalline carbon, amorphous carbon or a combination thereof. The crystalline carbon may be graphite such as non-shaped, sheet-shaped, flake-shaped, sphere-shaped, or fiber-shaped natural graphite or artificial graphite. The amorphous carbon may be a soft carbon, a hard carbon, a mesophase pitch carbonization product, calcined coke, and the like.

The lithium metal alloy includes an alloy of lithium and a metal selected from Na, K, Rb, Cs, Fr, Be, Mg, Ca, Sr, Si, Sb, Pb, In, Zn, Ba, Ra, Ge, Al, and Sn.

The material capable of doping/dedoping lithium may be a Si-based negative electrode active material or a Sn-based negative electrode active material. The Si-based negative electrode active material may include silicon, a silicon-carbon composite, SiOₓ (0 < x < 2), a Si-Q alloy (where Q is selected from an alkali metal, an alkaline-earth metal, a Group 13 element, a Group 14 element (excluding Si), a Group 15 element, a Group 16 element, a transition metal, a rare earth element, and a combination thereof). The Sn-based negative electrode active material may include Sn, SnO₂, a Sn-based alloy, or a combination thereof.

The silicon-carbon composite may be a composite of silicon and amorphous carbon. According to one or more embodiments, the silicon-carbon composite may be in a form of silicon particles and amorphous carbon coated on the surface of the silicon particles. For example, the silicon-carbon composite may include a secondary particle (core) in which primary silicon particles are assembled, and an amorphous carbon coating layer (shell) on the surface of the secondary particle. The amorphous carbon may also be between the primary silicon particles, and, for example, the primary silicon particles may be coated with the amorphous carbon. The secondary particle may exist dispersed in an amorphous carbon matrix.

The silicon-carbon composite may further include crystalline carbon. For example, the silicon-carbon composite may include a core including crystalline carbon and silicon particles and an amorphous carbon coating layer on a surface of the core.

The Si-based negative electrode active material or the Sn-based negative electrode active material may be used in combination with a carbon-based negative electrode active material.

For example, the negative electrode active material layer may include about 90 wt% to about 99 wt% of the negative electrode active material, about 0.5 wt% to about 5 wt% of the binder, and about 0 wt% to about 5 wt% of the conductive material.

The binder may serve to attach the negative electrode active material particles well or suitably to each other and also to attach the negative electrode active material well or suitably to the negative electrode current collector. The binder may include a non-aqueous binder, an aqueous binder, a dry binder, or a combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may be selected from a styrene-butadiene rubber, a (meth)acrylated styrene-butadiene rubber, a (meth)acrylonitrile-butadiene rubber, (meth)acrylic rubber, a butyl rubber, a fluoro rubber, polyethylene oxide, polyvinylpyrrolidone, polyepichlorohydrine, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resins, polyvinyl alcohol, and a combination thereof.

When an aqueous binder is used as the negative electrode binder, it may further include a cellulose-based compound capable of imparting viscosity. The cellulose-based compound may be selected from one or more of the group comprising: carboxymethyl cellulose, hydroxypropylmethyl cellulose, methyl cellulose, and alkali metal salts thereof. The alkali metal may be Na, K, or Li.

The dry binder may be a polymer material capable of being fiberized, and may be, for example, polytetrafluoroethylene, polyvinylidene fluoride, polyvinylidene fluoride-hexafluoropropylene copolymer, polyethylene oxide, or a combination thereof.

The conductive material is included to provide electrode conductivity, and any electrically conductive material may be used as a conductive material unless it causes a chemical change (e.g., an undesirable chemical change) in the battery. Examples of the conductive material may be a carbon-based material such as natural graphite, artificial graphite, carbon black, acetylene black, ketjen black, a carbon fiber, a carbon nanofiber, a carbon nanotube, and the like; a metal-based material such as copper, nickel, aluminum, silver, and the like in a form of a metal powder or a metal fiber; a conductive polymer such as a polyphenylene derivative; or a mixture thereof.

The negative electrode current collector may include one selected from a copper foil, a nickel foil, a stainless steel foil, a titanium foil, a nickel foam, a copper foam, a polymer substrate coated with a conductive metal, and a combination thereof, but is not limited thereto.

Depending on the type of the rechargeable lithium battery, a separator may be present between the positive electrode and the negative electrode. The separator may include polyethylene, polypropylene, polyvinylidene fluoride, or a multilayer film of two or more layers thereof, and a mixed multilayer film such as a polyethylene/polypropylene two-layer separator, polyethylene/polypropylene/polyethylene three-layer separator, polypropylene/polyethylene/polypropylene three-layer separator, and the like.

The separator may include a porous substrate and a coating layer including an organic material, an inorganic material, or a combination thereof on one or both surfaces (e.g., opposite surfaces) of the porous substrate.

The porous substrate may be a polymer film formed of any one selected polymer polyolefin such as polyethylene and polypropylene, polyester such as polyethylene terephthalate and polybutylene terephthalate, polyacetal, polyamide, polyimide, polycarbonate, polyether ketone, polyarylether ketone, polyetherimide, polyamideimide, polybenzimidazole, polyethersulfone, polyphenylene oxide, a cyclic olefin copolymer, polyphenylene sulfide, polyethylene naphthalate, a glass fiber, TEFLON, and polytetrafluoroethylene, or may be a copolymer or mixture of two or more thereof.

The organic material may include a polyvinylidene fluoride-based polymer or a (meth)acrylic polymer.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof, but is not limited thereto.

The organic material and the inorganic material may be mixed in one coating layer, or a coating layer including an organic material and a coating layer including an inorganic material may be stacked.

Hereinafter, examples of the present disclosure and comparative examples are described. These examples, however, are not in any sense to be interpreted as limiting the scope of the invention.

### (Example: Manufacture of rechargeable lithium battery cells)

### Example 1

LiNi_{0.8}Co_{0.1}Mn_{0.1}O₂ as a positive electrode active material, polyvinylidene fluoride as a binder, and acetylene black as a conductive material were mixed in a weight ratio of 97.5:1:1.5 and then, dispersed in N-methyl pyrrolidone to prepare positive electrode active material slurry.

The positive electrode active material slurry was coated on a 15 µm-thick Al foil and then, dried at 100 °C and pressed to manufacture a positive electrode.

Negative electrode active material slurry was prepared by mixing artificial graphite as a negative electrode active material, a styrene-butadiene rubber binder, and carboxymethyl cellulose in a weight ratio of 98:1:1 and then, dispersing the mixture in distilled water.

The negative electrode active material slurry was coated on a 10 µm-thick Cu foil and then, dried at 100 °C and pressed to manufacture a negative electrode.

The manufactured positive and negative electrodes were assembled with a 10 µm-thick polyethylene separator to manufacture an electrode assembly, and the following liquid electrolyte was implanted thereinto to manufacture a rechargeable lithium battery cell.

An exemplary composition of the liquid electrolyte is as follows.

### (Liquid electrolyte composition)

lithium salt: 1.15 M LiPF₆
Non-aqueous organic solvent: ethylene carbonate: ethylmethyl carbonate: Dimethyl carbonate (EC:EMC:DMC=volume ratio of 20:40:40)

### Additive:

(1) Polymer: Solvene^{®}200/P200 (CAS: 28960-88-5, poly(vinylidene fluoride-*co*-trifluoroethylene, Mw=200,000, (C₂H₂F₂)ₙ(C₂HF₃)ₘ n:m=80 mol%:20 mol%; from Solvay S.A.) 15 parts by weight,
(2) 1 part by weight of vinylene carbonate (VC)
   (In the above composition of the liquid electrolyte, "parts by weight" refers to the relative weight of the additive to the total weight of 100 parts by weight of the liquid electrolyte (lithium salt and non-aqueous organic solvent) excluding the additive.)

### Example 2

A rechargeable lithium battery cell was manufactured in substantially the same manner as in Example 1 except that Solvene^{®}200/P400 (CAS: 28960-88-5, poly(vinylidene fluoride-*co*-trifluoroethylene, Mw=400,000, (C₂H₂F₂)ₙ(C₂HF₃)ₘ n:m=80 mol%:20 mol%; from Solvay S.A.) was used instead of Solvene^{®}200/P200.

### Example 3

A rechargeable lithium battery cell was manufactured in substantially the same manner as in Example 1 except that Solvene^{®}250/P400 (CAS: 28960-88-5, poly(vinylidene fluoride-co-trifluoroethylene), Mw=400,000, (C₂H₂F₂)ₙ(C₂HF₃)ₘ n:m=75 mol%:25 mol%; from Solvay S.A.) was used instead of Solvene^{®}200/P200.

### Examples 4 and 5

Each rechargeable lithium battery cell was manufactured in substantially the same manner as in Example 1 except that the content of the polymer was respectively changed to 5 parts by weight and 10 parts by weight instead of 15 parts by weight.

### Comparative Example 1

Each rechargeable lithium battery cell was manufactured in substantially the same manner as in Example 1 except that the polymer was not used.

### Comparative Example 2

A rechargeable lithium battery cell was manufactured in substantially the same manner as in Example 1 except that a gel polymer electrolyte was prepared by adding a composition including 1 g of a polymer (Solvene^{®}200/P200) and 0.5 g of a polymerization initiator (AIBN) to 95.5 g of a non-aqueous organic solvent (ethylene carbonate: ethylmethyl carbonate: dimethyl carbonate = 20:40:40 in a volume ratio), in which 1.15 M LiPF₆ and 1 part by weight of vinylene carbonate (VC) were dissolved, and then, heating the mixture at 60 °C for 24 hours.

### Evaluation 1: Evaluation of high-temperature (45 °C) Cycle-life Characteristics

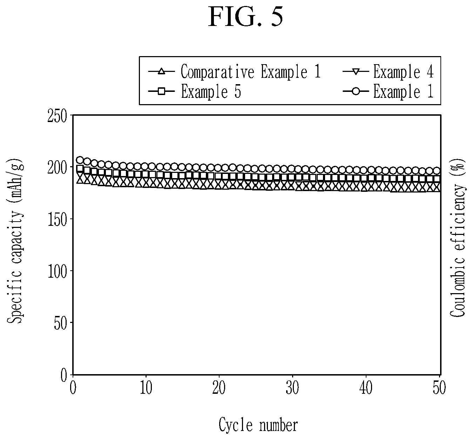

The rechargeable lithium battery cells according to Examples 1, 4, and 5 and Comparative Example 1 were 3 cycles charged and discharged at 1 C and continuously 50 cycles charged at 1.5 C and discharged at 1 C and then, measured with respect to discharge capacity and coulombic efficiency, and the results are shown in FIG. 5. Herein, a voltage range used for the charges and discharges was 3.0 V to 4.2 V (discharged down to 3.0 V and charged up to 4.2 V), and the evaluation was performed at 45 °C.

FIG. 5 is a graph showing specific capacity and coulombic efficiency according to cycle numbers during high temperature charging and discharging of rechargeable lithium battery cells

Referring to FIG. 5, a liquid electrolyte including the polymer of the present disclosure was capable of maintaining (e.g., maintaining) the specific capacity and the coulombic efficiency equally or at a higher level than a liquid electrolyte including no polymer. Accordingly, cycle-life characteristics of the rechargeable lithium battery cells including the polymer of the present disclosure may be expected to be not deteriorated but maintained at an excellent level.

### Evaluation 2: Hotbox Evaluation

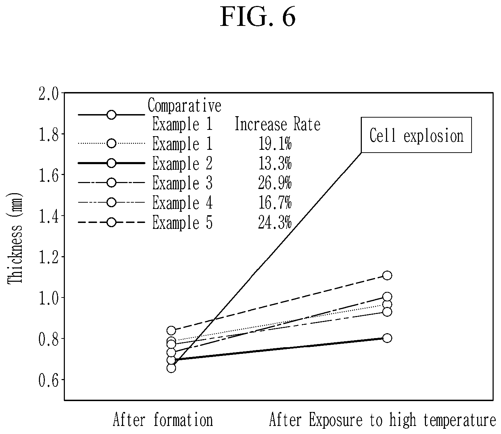

The pouch full cells of Examples 1 to 5 and Comparative Example 1 were charged to SOC 50 (e.g., state of charge 50%) (3.94 V) after a formation cycle and exposed to silicon oil at 130 °C for 5 minutes to compare degrees of volume expansion (thickness), and the results are shown in FIG. 6.

FIG. 6 is a result graph showing the results of the hot-box test of the pouch full cell.

Referring to FIG. 6, the pouch cell including no polymer (Comparative Example 1) burst due to volume expansion by (e.g., as a result of) gasification of the liquid electrolyte, but in the pouch full cells including the polymer of the present embodiments (Examples 1 to 5) gasification of the liquid electrolyte was suppressed or reduced, and the pouch full cells exhibited volume expansion alleviation. In other words, when the liquid electrolyte including the polymer of the present embodiments was included, thermal safety was improved even in an environment of being stored at a high temperature.

### Evaluation 3: TGA (Thermo gravimetric analysis) Evaluation

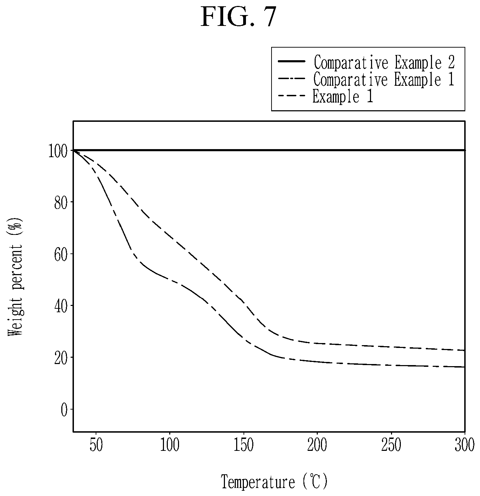

In order to measure a weight change of a material according to a temperature change, TGA analysis was performed on Example 1 and Comparative Examples 1 and 2, and the results are shown in FIG. 7.

FIG. 7 is a graph showing the results of TGA analysis of a liquid electrolyte according to one or more embodiments.

Referring to FIG. 7, as a result of the TGA analysis, in the liquid electrolyte of Example 1, mass at room temperature was halved due to gasification and thermal decomposition at 124 ^{°}C, which is 42 ^{°}C higher than the temperature of 82 ^{°}C at which the mass of the liquid electrolyte (including no polymer) of Comparative Example 1 was halved. The is assumed that when a liquid electrolyte in which the polymer was dissolved was introduced, the non-aqueous organic solvent participated in dissolution of the polymer to increase a boiling point due to Van der Waals force between polymer and non-aqueous organic solvent and thereby, delaying gasification of the liquid electrolyte at a high temperature and thus delaying explosion of the rechargeable lithium battery cells due to battery expansion and an increase in battery internal pressure.

In contrast, when evaluated the polymer itself, since the mass halving does not occur in Comparative Example 2 to which a gel polymer electrolyte was applied, the effects of delaying gasification of the liquid electrolyte and delaying battery explosion due to the battery expansion and the increased internal pressure, which are desired in the present disclosure, were not expected.

### Evaluation 4: Evaluation of High-temperature Direct Current Internal Resistance (DC-IR) Characteristics

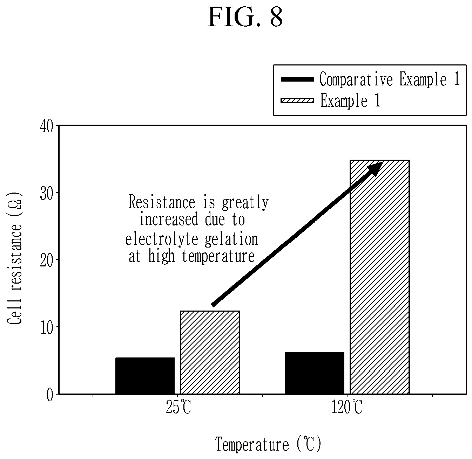

The rechargeable lithium battery cells of Example 1 and Comparative Example 1 were measured with respect to initial DC internal resistance (DCIR) by △V/△I (voltage change/current change) and then, remeasured with respect to room temperature (25 °C) DC internal resistance after making an internal maximum energy state of the cells to be a full-charge state (SOC 100%) and with respect to high temperature (120 °C) cell resistance when maintained for 1 hour after reaching the high temperature (120 °C), and the results are shown in FIG. 8.

FIG. 8 shows the results of measuring the cell resistance of the rechargeable lithium battery cells maintained for 1 hour after reaching room temperature (25 °C) and high temperature (120 °C), respectively.

Referring to FIG. 8, when a temperature of the rechargeable lithium battery cell of Example 1 into which a liquid electrolyte was introduced was increased to 120 °C, resistance significantly increased at least in part due to gelation of the liquid electrolyte, and the gelled electrolyte solution worked as an insulator between positive and negative electrodes, resultantly reducing sudden energy release, explosion, and/or a risk of fire due to a short circuit between the positive and negative electrodes.

### Evaluation 5: Evaluation Direct Current Internal Resistance (DC-IR) Characteristics after Being Left at High Temperature

The rechargeable lithium battery cells of Example 1 and Comparative Example 2 were measured with respect to initial DC internal resistance (DC-IR) by △V/△I (voltage change/current change) and then, remeasured with respect to high temperature (60 °C) DC internal resistance after making an internal maximum energy state of the rechargeable lithium battery cells to be a full-charge state (SOC 100%) and high temperature (60 °C) DC internal resistance after left at the high temperature (60 °C) for 5 days, the DC internal resistance increase rate is calculated, and the results are shown in Table 1.

**(Table 1)**

| | Initial DC internal resistance (Ω) | Direct current internal resistance after being left at 60 °C for 5 days (Ω) | DC Internal resistance Increase rate (%) |
|---|---|---|---|
| Example 1 | 12.1 | 14.2 | 17.4 |
| Comparative Example 2 | 13.5 | 27.5 | 103.7 |

Referring to Table 1, during formation of a gel polymer (Comparative Example 2), the rechargeable lithium battery cell of Comparative Example 2exhibited significant increase in resistance even at 50 °C to 60 °C (e.g., where an initiator worked) and exhibited higher DC internal resistance after being left at a high temperature than the rechargeable lithium battery cell of Example 1, and in addition, a significantly higher DC internal resistance increase rate due to an additional increase in DC internal resistance that was at least in part due to a continuous cross-linking reaction than the rechargeable lithium battery cell of the Example.

In contrast, the polymer in the liquid electrolyte of the example was gelled at 100 °C to 120 °C and had almost no increase in DC internal resistance at 60 °C and exhibited relatively low DC internal resistance after being left at 60 °C.

Accordingly, the liquid electrolyte including the polymer additive according to the present disclosure was gelled due to crystallization of the polymer at a high temperature, and the gelled liquid electrolyte formed a solid film, which worked as an insulator and blocked ion conductivity and electricity conductivity between the positive and negative electrodes, resultantly suppressing or reducing ignition and/or explosion of rechargeable lithium battery cells.

In addition, the gelled liquid electrolyte of the present embodiments suppressed or reduced shrinkage of the separator at a high temperature by physically bonding positive electrode-separator-negative electrode and thus prevented or reduced a short circuit between the positive and negative electrodes.

Although the preferred embodiments of the present disclosure have been described through the above, the present disclosure is not limited thereto, and can be implemented by various modifications within the scope of the claims and detailed description of the invention and the accompanying drawings, which also fall within the scope of the present disclosure.

### <Description of Symbols>

| | | | |
|---|---|---|---|
| 100: | rechargeable lithium battery | 10: | positive electrode |
| 11: | positive electrode lead tab | 12: | positive terminal |
| 20: | negative electrode | 21: | negative electrode lead tab |
| 22: | negative terminal | 30: | separator |
| 40: | electrode assembly | 50: | case |
| 60: | sealing member | 70: | electrode tab |
| 71: | positive electrode tab | 72: | negative electrode tab |

## Claims

1. A liquid electrolyte, comprising
a lithium salt;
a non-aqueous organic solvent;
a primary additive, the primary additive comprises a polymer represented by Chemical Formula 1: 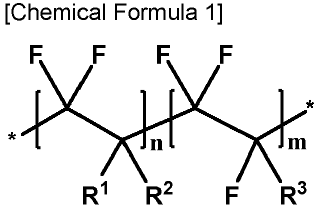
in Chemical Formula 1, R¹ to R³ are each independently hydrogen, fluorine, or a substituted or unsubstituted C1 to C10 alkyl group, and
n and m are mole fractions and are, respectively, 50 mol%≤n≤90 mol%, 10 mol%≤m≤50 mol%; and
wherein the liquid electrolyte further comprises at least one of a secondary additive selected from the group of vinylene carbonate, fluoroethylene carbonate, difluoroethylene carbonate, chloroethylene carbonate, dichloroethylene carbonate, bromoethylene carbonate, dibromoethylene carbonate, nitroethylene carbonate, cyanoethylene carbonate, vinylethylene carbonate, adiponitrile, succinonitrile, 1,3,6-hexane tricyanide, propenesultone, propanesultone, lithium tetrafluoroborate, lithium difluorophosphate, and 2-fluoro biphenyl.

2. The liquid electrolyte of claim 1, wherein
a ratio of n and m (n:m) are 80 mol% : 20 mol% to 60 mol% : 40 mol%.

3. The liquid electrolyte of claim 1 or 2, wherein
a molecular weight of the polymer is 100,000 g/mol to 400,000 g/mol measured by static light scattering.

4. The liquid electrolyte of one of the preceding claims, wherein
the polymer is in a form of particles having an average particle diameter (D50) of 10 nm to 1 µm measured by laser diffraction.

5. The liquid electrolyte of one of the preceding claims, wherein
R¹ to R³ in Chemical Formula 1 are each independently hydrogen, or a substituted or unsubstituted C1 to C5 alkyl group.

6. The liquid electrolyte of one of claims 1 to 4, wherein
the polymer is poly(vinylidene fluoride-co-trifluoroethylene).

7. The liquid electrolyte of claim 6, wherein the polymer is poly(vinylidene fluoride-co-trifluoroethylene) according to Chemical Formula 1 with R¹ to R³ are hydrogen, and
the ratio of the mole fractions n : m is 80 mol% : 20 mol% to 75 mol% : 25 mol%.

8. The liquid electrolyte of one of the preceding claims, wherein
the polymer is gellable at a temperature of 100 °C to 120 °C.

9. The liquid electrolyte of one of the preceding claims, wherein
the polymer is included in an amount of 0.1 to 15 parts by weight based on a total of 100 parts by weight of the liquid electrolyte.

10. The liquid electrolyte of one of the preceding claims, wherein
the non-aqueous organic solvent comprises at least one of a carbonate-based solvent, an ester-based solvent, an ether-based solvent, a ketone-based solvent, an alcohol-based solvent, an aprotic solvent, or mixtures thereof.

11. The liquid electrolyte of one of claims 1 to 9, wherein
the non-aqueous organic solvent comprises a carbonate-based solvent selected from at least one of the group of dimethyl carbonate, diethyl carbonate, dipropyl carbonate, methylpropyl carbonate, ethylpropyl carbonate, ethylmethyl carbonate, ethylene carbonate, propylene carbonate, butylene carbonate, or mixtures thereof.

12. The liquid electrolyte of claim 11, wherein
the carbonate-based solvent is a mixture of ethylene carbonate, ethylmethyl carbonate and dimethyl carbonate.

13. The liquid electrolyte of one of claims 1 to 9, wherein
the non-aqueous organic solvent includes cyclic carbonate and chain carbonate in a volume ratio of 10:90 vol% to 50:50 vol%.

14. A rechargeable lithium battery (100) comprising
a positive electrode (10) including a positive electrode active material;
a negative electrode (20) including a negative electrode active material; and
the liquid electrolyte according to one of claims 1 to 13.

## Patentansprüche

1. Flüssiger Elektrolyt, umfassend
ein Lithiumsalz;
ein nicht wässriges organisches Lösungsmittel;
ein primäres Additiv, wobei das primäre Additiv ein durch die chemische Formel 1 dargestelltes Polymer umfasst: 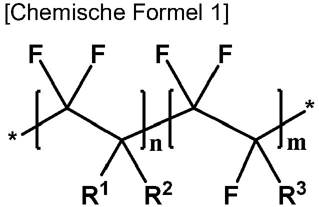
wobei in der chemischen Formel 1 R¹ bis R³ jeweils unabhängig für Wasserstoff, Fluor oder eine substituierte oder unsubstituierte C1- bis C10-Alkylgruppe stehen, und
n und m Molfraktionen sind und 50 Mol-% ≤ n ≤ 90 Mol-% beziehungsweise 10 Mol-% ≤ m ≤ 50 Mol-% sind; und
wobei der flüssige Elektrolyt ferner mindestens eines von einem sekundären Additiv umfasst, das aus der Gruppe aus Vinylencarbonat, Fluorethylencarbonat, Difluorethylencarbonat, Chlorethylencarbonat, Dichlorethylencarbonat, Bromethylencarbonat, Dibromethylencarbonat, Nitroethylencarbonat, Cyanoethylencarbonat, Vinylethylencarbonat, Adiponitril, Succinonitril, 1,3,6-Hexan-tricyanid, Propensulton, Propansulton, Lithiumtetrafluorborat, Lithiumdifluorphosphat und 2-Fluorbiphenyl ausgewählt ist.

2. Flüssiger Elektrolyt nach Anspruch 1, wobei
ein Verhältnis von n zu m (n:m) zwischen 80 Mol-% : 20 Mol-% und 60 Mol-% : 40 Mol-% beträgt.

3. Flüssiger Elektrolyt nach Anspruch 1 oder 2, wobei
ein Molekulargewicht des Polymers 100.000 g/mol bis 400.000 g/mol, gemessen mittels statischer Lichtstreuung, beträgt.

4. Flüssiger Elektrolyt nach einem der vorhergehenden Ansprüche, wobei
das Polymer in Form von Partikeln vorliegt, die einen durchschnittlichen Partikeldurchmesser (D50) von 10 nm bis 1 µm, gemessen mittels Laserbeugung, aufweisen.

5. Flüssiger Elektrolyt nach einem der vorhergehenden Ansprüche, wobei
R¹ bis R³ in der chemischen Formel 1 jeweils unabhängig für Wasserstoff oder eine substituierte oder unsubstituierte C1- bis C5-Alkylgruppe stehen.

6. Flüssiger Elektrolyt nach einem der Ansprüche 1 bis 4, wobei
das Polymer Poly(vinylidenfluorid-co-Trifluorethylen) ist.

7. Flüssiger Elektrolyt nach Anspruch 6, wobei das Polymer Poly(vinylidenfluorid-co-Trifluorethylen) gemäß der chemischen Formel 1 ist, wobei R¹ bis R³ Wasserstoff sind, und das Verhältnis der Molfraktionen n : m zwischen 80 Mol-% : 20 Mol-% und 75 Mol-% : 25 Mol-% beträgt.

8. Flüssiger Elektrolyt nach einem der vorhergehenden Ansprüche, wobei
das Polymer bei einer Temperatur von 100 °C bis 120 °C gelierbar ist.

9. Flüssiger Elektrolyt nach einem der vorhergehenden Ansprüche, wobei
das Polymer in einer Menge von 0,1 bis 15 Gewichtsteilen basierend auf insgesamt 100 Gewichtsteilen des flüssigen Elektrolyten beinhaltet ist.

10. Flüssiger Elektrolyt nach einem der vorhergehenden Ansprüche, wobei
das nicht wässrige organische Lösungsmittel mindestens eines von einem Lösungsmittel auf Carbonatbasis, einem Lösungsmittel auf Esterbasis, einem Lösungsmittel auf Etherbasis, einem Lösungsmittel auf Ketonbasis, einem Lösungsmittel auf Alkoholbasis, einem aprotischen Lösungsmittel oder Gemischen davon umfasst.

11. Flüssiger Elektrolyt nach einem der Ansprüche 1 bis 9, wobei
das nicht wässrige organische Lösungsmittel ein Lösungsmittel auf Carbonatbasis umfasst, das aus mindestens einem aus der Gruppe aus Dimethylcarbonat, Diethylcarbonat, Dipropylcarbonat, Methylpropylcarbonat, Ethylpropylcarbonat, Ethylmethylcarbonat, Ethylencarbonat, Propylencarbonat, Butylencarbonat oder Gemischen davon ausgewählt ist.

12. Flüssiger Elektrolyt nach Anspruch 11, wobei
das Lösungsmittel auf Carbonatbasis ein Gemisch aus Ethylencarbonat, Ethylmethylcarbonat und Dimethylcarbonat ist.

13. Flüssiger Elektrolyt nach einem der Ansprüche 1 bis 9, wobei
das nicht wässrige organische Lösungsmittel ein cyclisches Carbonat und ein Kettencarbonat in einem Volumenverhältnis von 10:90 Vol-% bis 50:50 Vol-% beinhaltet.

14. Wiederaufladbare Lithiumbatterie (100), umfassend
eine positive Elektrode (10), die ein Aktivmaterial für die positive Elektrode beinhaltet;
eine negative Elektrode (20), die ein Aktivmaterial für die negative Elektrode beinhaltet; und
den flüssigen Elektrolyten nach einem der Ansprüche 1 bis 13.

## Revendications

1. Électrolyte liquide, comportant
un sel de lithium ;
un solvant organique non aqueux ;
un additif primaire, l'additif primaire comporte un polymère représenté par la Formule chimique 1 : 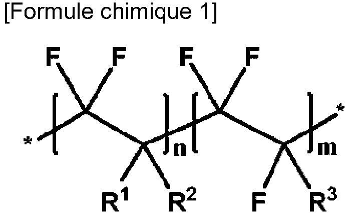
dans la Formule chimique 1, R¹ à R³ sont chacun indépendamment hydrogène, fluor ou un groupe alkyle en C1 à C10 substitué ou non substitué, et
n et m sont des fractions molaires et sont, respectivement, 50 % en moles ≤n≤90 % en moles, 10 % en moles≤m≤50 % en moles ; et
dans lequel l'électrolyte liquide comporte en outre au moins un parmi un additif secondaire choisi dans le groupe constitué du carbonate de vinylène, du carbonate de fluoroéthylène, du carbonate de difluoroéthylène, du carbonate de chloroéthylène, du carbonate de dichloroéthylène, du carbonate de bromoéthylène, du carbonate de dibromoéthylène, du carbonate de nitroéthylène, du carbonate de cyanoéthylène, du carbonate de vinyléthylène, de l'adiponitrile, du succinonitrile, du tricyanure de 1,3,6-hexane, de la propènesultone, de la propanesultone, du tétrafluoroborate de lithium, du difluorophosphate de lithium et du 2-fluorobiphényle.

2. Électrolyte liquide selon la revendication 1, dans lequel
un rapport de n et de m (n : m) est de 80 % en moles : 20 % en moles à 60 % en moles : 40 % en moles.

3. Électrolyte liquide selon la revendication 1 ou 2, dans lequel
un poids moléculaire du polymère va de 100 000 g/mol à 400 000 g/mol mesuré par diffusion statique de la lumière.

4. Électrolyte liquide selon l'une des revendications précédentes, dans lequel
le polymère est sous forme de particules ayant un diamètre moyen des particules (D50) de 10 nm à 1 µm mesuré par diffraction laser.

5. Électrolyte liquide selon l'une des revendications précédentes, dans lequel
R¹ à R³ dans la Formule chimique 1 sont chacun indépendamment hydrogène, ou un groupe alkyle en C1 à C5 substitué ou non substitué.

6. Électrolyte liquide selon l'une des revendications 1 à 4, dans lequel
le polymère est du poly(fluorure de vinylidène-co-trifluoroéthylène).

7. Électrolyte liquide selon la revendication 6, dans lequel le polymère est du poly(fluorure de vinylidène-co-trifluoroéthylène) selon la Formule Chimique 1 avec R¹ à R³ qui sont hydrogène, et
le rapport des fractions molaires n : m est de 80 % en moles : 20 % en moles à 75 % en moles : 25 % en moles.

8. Électrolyte liquide selon l'une des revendications précédentes, dans lequel
le polymère est gélifiable à une température de 100 °C à 120 °C.

9. Électrolyte liquide selon l'une des revendications précédentes, dans lequel
le polymère est inclus en une quantité de 0,1 à 15 parties en poids sur un total de 100 parties en poids de l'électrolyte liquide.

10. Électrolyte liquide selon l'une des revendications précédentes, dans lequel
le solvant organique non aqueux comporte au moins un parmi un solvant à base de carbonate, un solvant à base d'ester, un solvant à base d'éther, un solvant à base de cétone, un solvant à base d'alcool, un solvant aprotique, ou des mélanges de ceux-ci.

11. Électrolyte liquide selon l'une des revendications 1 à 9, dans lequel
le solvant organique non aqueux comporte un solvant à base de carbonate choisi parmi au moins du groupe constitué du carbonate de diméthyle, du carbonate de diéthyle, du carbonate de dipropyle, du carbonate de méthylpropyle, du carbonate d'éthylpropyle, du carbonate d'éthylméthyle, du carbonate d'éthylène, du carbonate de propylène, du carbonate de butylène, ou de mélanges de ceux-ci.

12. Électrolyte liquide selon la revendication 11, dans lequel
le solvant à base de carbonate est un mélange de carbonate d'éthylène, de carbonate d'éthylméthyle et de carbonate de diméthyle.

13. Électrolyte liquide selon l'une des revendications 1 à 9,
dans lequel le solvant organique non aqueux comprend un carbonate cyclique et un carbonate linéaire dans un rapport volumique de 10 : 90 % en volume à 50 : 50 % en volume.

14. Batterie secondaire au lithium (100) comportant
une électrode positive (10) incluant un matériau actif d'électrode positive ;
une électrode négative (20) incluant un matériau actif d'électrode négative ; et
l'électrolyte liquide selon l'une des revendications 1 à 13.
